Europäisches Patentamt

European Patent Office

Office européen des brevets

(11) Veröffentlichungsnummer : **0 026 285**
**B1**

(12) **EUROPÄISCHE PATENTSCHRIFT**

(45) Veröffentlichungstag der Patentschrift :
05.10.83

(21) Anmeldenummer : 80104349.8

(22) Anmeldetag : 24.07.80

(51) Int. Cl.³ : **B 65 G  35/08**, B 23 Q   7/14,
F 16 H  25/14

(54) **Schalttisch.**

(30) Priorität : **18.08.79 DE 2933491**

(43) Veröffentlichungstag der Anmeldung :
08.04.81 Patentblatt 81/14

(45) Bekanntmachung des Hinweises auf die Patenterteilung : 05.10.83 Patentblatt 83/40

(84) Benannte Vertragsstaaten :
**AT BE CH FR GB IT LI LU NL SE**

(56) Entgegenhaltungen :
DD A 50 491
DE A 2 048 246
DE A 2 515 751
DE B 1 264 930
DE B 1 456 954
DE B 2 036 023
FR A 2 269 469
GB A 1 260 112
US A 2 903 120
US A 2 999 579
US A 3 809 208

(73) Patentinhaber : **Tampoprint GmbH**
**Daimlerstrasse 27/1**
**D-7015 Korntal-Münchingen 3 (DE)**

(72) Erfinder : **Cramer, Heinz**
**Einsteinstrasse 56**
**D-7250 Leonberg-Ramtel (DE)**

(74) Vertreter : **Patentanwälte Kohler - Schwindling -**
**Späth**
**Hohentwielstrasse 41**
**D-7000 Stuttgart 1 (DE)**

## Schalttisch

Die Erfindung betrifft einen Schalttisch gemäß dem Oberbegriff des Anspruchs 1. Derartige Schalttische dienen zum Transport von Werkstücken in verschiedene Bearbeitungsstationen. Bei einem aus der US-PS 2 999 579 bekannten Schalttisch der im Oberbegriff des Anspruches 1 geschilderten Art wird der Antrieb der Transportplatten durch insgesamt vier hydraulische oder pneumatische Zylinder gebildet, die es ermöglichen, die Transportplatten jeweils in eine Richtung zu schieben. Eine derartige Anordnung ist aufwendig und es hat sich herausgestellt, daß derartige Anordnungen nicht immer zuverlässig arbeiten und auch einen erheblichen Aufwand für die zeitliche Abstimmung der verschiedenen Bewegungsabläufe nacheinander erfordern.

Der Erfindung liegt die Aufgabe zugrunde, einen Schalttisch der eingangs geschilderten Art so auszubilden, daß er bei hoher Präzision rein mechanisch arbeitet.

Diese Aufgabe wird durch die im kennzeichnenden Teil des Anspruchs 1 angegebenen Merkmale gelöst.

Es ist dabei zu berücksichtigen, daß der Antrieb jeweils nur an der in Bewegungsrichtung letzten Transportplatte angreift und sich deren Bewegung auf die in der selben Führungsbahn in Bewegungsrichtung weiter vorn befindlichen Transportplatten durch die Anlage der Transportplatten aneinander ergibt. Die Schieber liegen an der in Bewegungsrichtung jeweils letzten Transportplatte an. Durch die am Ende des einarmigen Hebels angelenkte Übertragungsstange wird die vierte Führungsbahn ohne großen zusätzlichen Aufwand an das Bewegungserzeugungssystem angeschlossen. Die Wippe ist dabei annähernd parallel zum einarmigen Hebel angeordnet und weist etwa die Länge auf, die dem Abstand zwischen der Anlage des einarmigen Hebels an der Kurvenscheibe und dem Ende des einarmigen Hebels gleich ist. Der Diagonalarm erzeugt mit seinen beiden Enden die Bewegungen in zwei zueinander parallelen Führungsbahnen, wogegen der einarmige Hebel in Verbindung mit der Wippe die Bewegungen in den beiden anderen Führungsbahnen erzeugt. Dabei ist zu beachten, daß die Bewegungsamplitude jeweils nur geringfügig größer zu sein braucht als die Länge bzw. Breite der Transportplatten, da ja nur jeweils um eine Transportplattenteilung weiterbewegt wird.

Von besonderem Vorteil bei der Erfindung ist, daß durch zweckmäßige Wahl der Hebellängen und Hebelangriffspunkte sowie Hebelachsen sämtliche Bewegungen durch eine einzige Kurvenscheibe erzeugt werden.

Die Bewegung der Transportplatten erfolgt jeweils während der Arbeitspause der Bearbeitungsmaschinen ; umgekehrt erfolgt die Bearbeitung der Werkstücke jeweils während der Transportpausen des Schalttisches. Um ein zügiges Arbeiten zu erzielen, setzt sich der Schalttisch am Ende seines Bewegungszyklus selbsttätig still. Zu diesem Zweck ist an der Kurvenscheibe ein Nocken zum Betätigen eines Endschalters angebracht, der nach je einem Umlauf der Kurvenscheibe einen Antriebsmotor stillsetzt, der durch ein äußeres Signal wieder in Betrieb setzbar ist. Dieses äußere Signal wird von der Bearbeitungsmaschine am Ende eines Arbeitstaktes erzeugt. Es versteht sich, daß sich die Arbeitstakte der Bearbeitungsmaschine, beispielsweise einer Tampondruckmaschine und des Schalttisches überschneiden können, wobei lediglich darauf zu achten ist, daß während des eigentlichen Bearbeitungsvorganges die Transportplatten unbewegt sind. Dies erfolgt in einfachster Weise dadurch, daß der Nocken und der Endschalter so angeordnet sind, daß am Ende der Anschlagbewegung ein Anhalten des Antriebes erfolgt, weil dadurch gleichzeitig die Transportplatten in ihrer Endposition gehalten sind. Um kleinere Toleranzen auszugleichen, können zwischen Schieber und Transportplatte bzw. Hebel und Schieber Federelemente zwischengeschaltet sein.

Bei einer Ausführungsform der Erfindung sind die Transportplatten an ihrer Unterseite mit einer Führungsrolle versehen, die in einer Hilfsführungsnut geführt ist. Diese zentral vorgesehene Hilfsführungsnut erleichtert insbesondere den Übergang von einer geradlinigen Führungsbahn zur nächsten.

Im folgenden wird ein Ausführungsbeispiel der Erfindung anhand der Zeichnung beschrieben. Es zeigen in vereinfachter und schematisierter Darstellung unter Weglassung für das Verständnis der Erfindung nicht erforderlicher Einzelheiten :

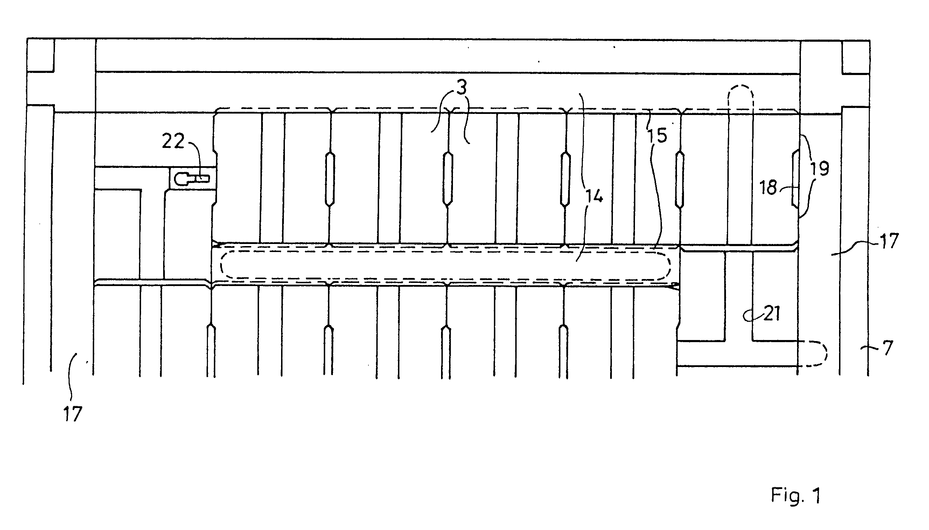

Figur 1　eine Draufsicht auf einen Schalttisch,

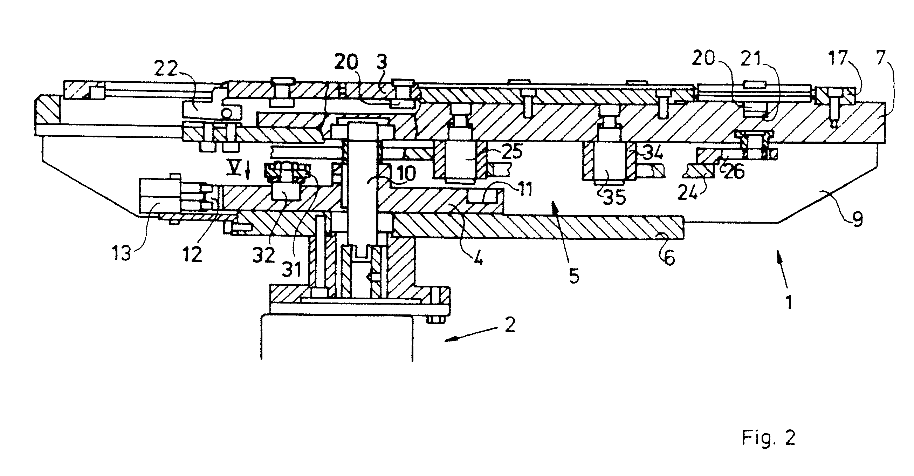

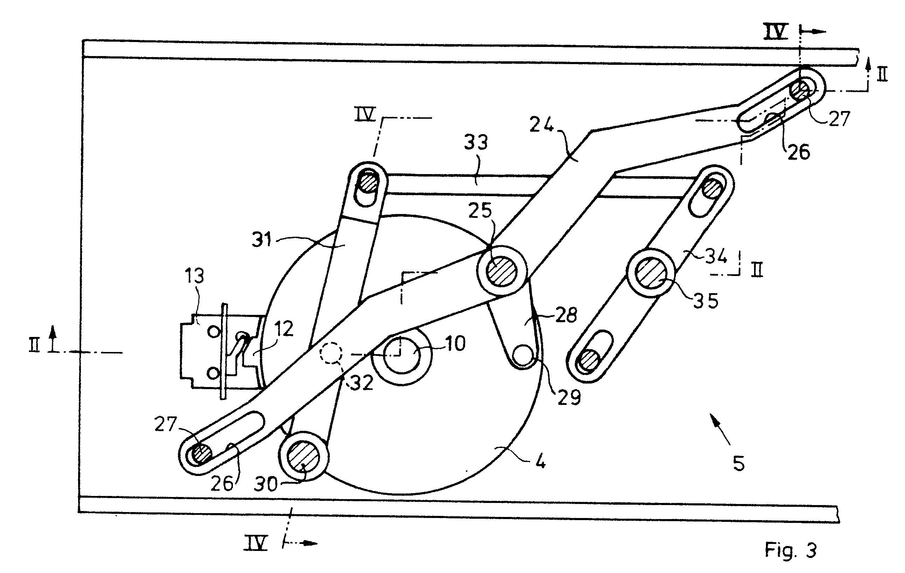

Figur 2　einen Längsschnitt nach der Linie II-II in Fig. 3,

Figur 3　eine Draufsicht auf das Antriebssystem nach Wegnahme darüberliegender Teile,

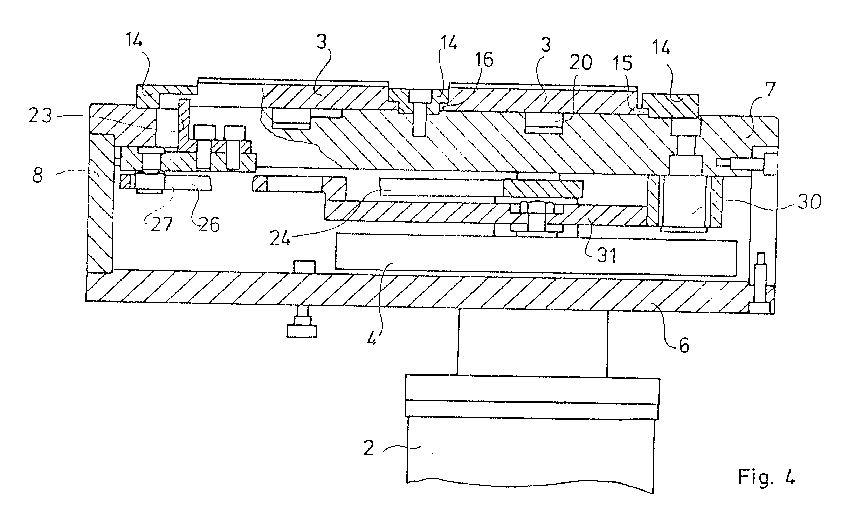

Figur 4　einen Querschnitt durch den Schalttisch, und

Figur 5　eine Draufsicht auf die Kurvenscheibe in Richtung eines Pfeiles V der Fig. 2.

Der in der Zeichnung dargestellte Viereckschalttisch umfaßt ein Gehäuse 1 mit einem an der Unterseite angeflanschten Getriebemotor 2, an der Oberseite befindlichen Transportplatten 3 und einem innerhalb des Gehäuses 1 untergebrachten Antriebssystem mit einer Kurvenscheibe 4 und einem Hebelgetriebe 5. Das Gehäuse 1 umfaßt eine Unterplatte 6, eine dazu parallele Oberplatte 7, zwei Seitenplatten 8 und zwei nach unten gezogenen Seitenabdeckplatten 9. Die Unterplatte 6, die Seitenplatten 8 und die Oberplatte 7 bilden zusammen einen starren Rahmenkörper. An der Unterplatte 6 ist der Getriebemotor 2 befestigt und es ist in ihr und in der Oberplatte 7 eine vom Motor 2 angetriebene Zwischenwelle 10 gelagert, auf der die Kurvenscheibe 4 aufgekeilt ist, die die Gestalt einer Kreisscheibe aufweist, in die von einer Seite ausgehend eine in sich geschlossene Nut 11 eingearbeitet ist. An einer Stelle des Umfanges der Kurvenscheibe 4 sind radial vorstehende Nocken 12 befestigt, in deren Bewegungsbahn Endschalter 13 ragen, die im Stromkreis der Steuerung des Getriebemotors 2 liegen.

An der Oberplatte 7 sind drei in gleichen Abständen zueinander parallel angeordnete Führungsleisten 14 befestigt, die so profiliert sind, daß sie je eine Führungsnut 15 bilden, in die ein vorstehendes Führungselement 16 jeder Transportplatte 3 eingreift. Dadurch lassen sich die Transportplatten 3 nur in Längsrichtung der Führungsleisten 14 bzw. Führungsnuten 15 bewegen, solange sie sich zwischen zwei der Führungsleisten 14 befinden. Die mittlere Führungsleiste 14 ist um etwa die doppelte Breite einer Führungsplatte 3 kürzer als die beiden äußeren Führungsleisten 14. An die Enden der beiden äußeren Führungsleisten 14 grenzen quer dazu angeordnete Anschlagleisten 17 an, die auf der nach innen weisenden Seite eine Anschlagfläche 18 aufweisen, an der die Transportplatten 3 mit zwei an ihrer Längsseite vorgesehenen Anschlagflächen 19 zur Anlage kommen.

An der Oberseite der Transportplatten 3 sind nicht dargestellte Werkzeughalter zu befestigen. Zu diesem Zweck sind die Transportplatten 3 mit entsprechenden Bohrungen und Aufnahmenuten versehen. An der Unterseite jeder Transportplatte 3 ist eine Führungsrolle 20 drehbar gelagert, die in einer in die Oberplatte 7 eingearbeiteten Führungsnut 21 abrollt. Die Führungsnut 21 mit den Führungsrollen 20 sorgt für einen zuverlässigen Umlauf in der gewünschten Viereckbahn. Jeweils an einem Ende ist jeder der vier Abschnitte der Führungsnut 21 mit einer Verlängerung versehen, in der ein Schieber 22 für die Längsbewegung bzw. einen Schieber 23 für die Querbewegung geführt ist.

Die Hebel des Hebelgetriebes sind sämtlich um zur Achse der Kurvenscheibe 4 parallele und zur Fläche der Oberplatte 7 senkrechte Achsen schwenkbar. Ein Diagonalhebel 24 ist um eine etwa im Zentrum des Viereckschalttisches angeordnete Achse 25 schwenkbar. Er ist an seinen Enden mit je einem Langloch 26 versehen, in das sich je ein Antriebszapfen 27 jedes der beiden Schieber 23 erstreckt. Die Länge des Diagonalhebels 24 entspricht also etwa der Länge der Diagonale des von den Leisten begrenzten Viereckes. Im Bereich der Achse 25 ist der Diagonalhebel 24 mit einem sich quer zu seiner Länge erstreckenden Antriebsarm 28 versehen, der an seinem Ende eine Rolle 29 trägt, die in die Nut 11 der Kurvenscheibe 4 eingreift. Der Arm 28 verschwenkt den Diagonalhebel 24 entsprechend der Kurvenkontur der Nut 11.

In der Nähe des sich über die Kurvenscheibe hinweg erstreckenden Armes des Diagonalhebels 24 ist um eine Achse 30 ein einarmiger Hebel 31 schwenkbar gelagert, der in einem Abstand von etwa einem Drittel seiner Länge von der Achse 30 mit einer Rolle 32 versehen ist, die ebenfalls in die Nut 11 eingreift. Am Ende des einarmigen Hebels 31, dessen Rolle 32 an einer Stelle in die Nut 11 eingreift, die der Stelle etwa gegenüberliegt, in der die Rolle 29 in die Nut 11 eingreift, ist eine Übertragungsstange 33 mit ihrem einen Ende angelenkt. Das andere Ende der Übertragungsstange 33 ist an einem Ende einer Wippe 34 angelenkt, die als zweiarmiger, etwa in seiner Mitte um eine Achse 35 schwenkbarer Hebel ausgebildet ist. Das der Übertragungsstange 33 abgewandte Ende der Wippe 34 ist ebenfalls mit einem Langloch versehen, in das ein Antriebszapfen eines der beiden Schieber 22 eingreift. (Der Antriebszapfen des anderen Schiebers 22 greift in ein am Ende des einarmigen Hebels 31 befindliches Langloch ein).

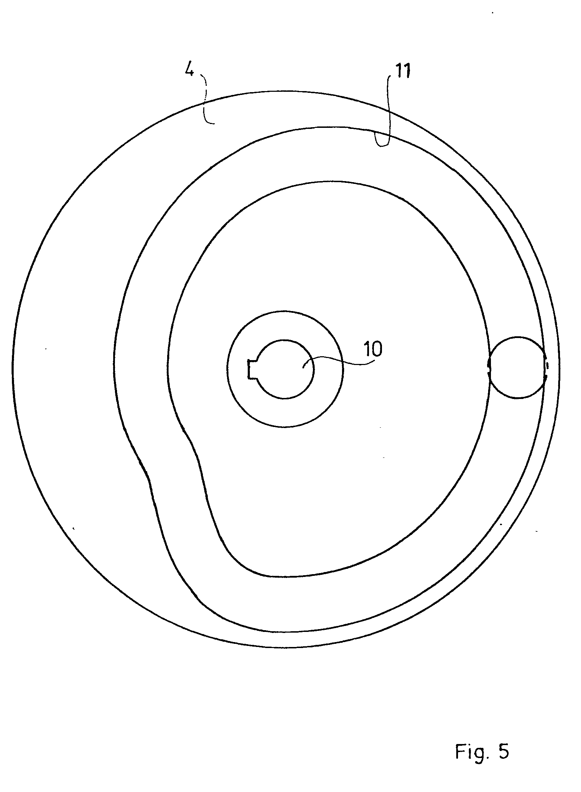

Der Verlauf der Nut 11 in der Kurvenscheibe 4 ist aus Fig. 5 ersichtlich. Überraschenderweise ist es möglich, mit derselben Nut beide Antriebsbewegungen also sowohl in Längsrichtung des Vierecks als auch quer hierzu, zu erzeugen.

Beim Umlauf der Kurvenscheibe werden der einarmige Hebel 31 und der Antriebsarm 28 verschwenkt, wodurch die Schieber 22 und 23 angetrieben werden. Dabei wirkt zunächst der Schieber 23 für die Querbewegung, also für die Bewegung parallel zur Leiste 17. Erst anschließend erfolgt die Vorschubbewegung der beiden Schieber 22, wodurch die beiden Reihen von Transportplatten 3 in entgegengesetzter Richtung jeweils bis zur Anlage mit ihren Anschlagflächen 19 an der Anschlagfläche 18 der Anschlagleiste 17 vorbewegt werden. Dabei werden sämtliche Transportplatten 3 um die gleiche Strecke, nämlich eine Transportplattenbreite vorbewegt. Durch die Anlage an der Anschlagfläche 19 der Anschlagleiste 17 bzw. die gegenseitige Anlage der Transportplatten aneinander ist ihre Lage im Zusammenwirken mit den Führungsnuten 15 und den Führungselementen 16 eindeutig definiert und exakt eingehalten.

Wesentlich ist, daß die Transportplatten flach zur Anlage kommen, also ohne Gleitbewegung relativ zur Anschlagfläche, und daß die Transportplatten ohne den Einsatz von Werkzeugen entnommen und wieder eingesetzt werden können. Zu diesem Zweck sind sie in Richtung der Bewegung parallel zur Anschlagleiste 17 frei entnehmbar, weil parallel zu dieser Bewegungsrichtung keine Führungselemente 16 an den Transportplatten 3 angebracht sind.

**Ansprüche**

1. Schalttisch mit mehreren Werkstückhaltern, mit einem Schrittantrieb für eine zyklisch umlaufende, schrittweise, durch im Rechteck angeordnete geradlinige Führungen (14, 15, 17) geführte Weiterbewegung in eine durch Anschläge definierte Position, in der an dem Werkstück ein Bearbeitungsvorgang durchgeführt bzw. das Werkstück aufgelegt oder abgenommen wird, mit einem Gehäuse (1), in dem der Antrieb und die Anschläge untergebracht sind und das die Führungen (14, 15, 17) aufweist, wobei die Werkstückhalter auf je einer rechteckförmigen Transportplatte (3) angeordnet sind und die Transportplatten (3) mit in die Führungsbahnen (15) eingreifenden Elementen (16) versehen sind, dadurch gekennzeichnet, daß als Antrieb für alle Bewegungen eine einzige umlaufende Kurvenscheibe (4) mit einem Hebelgetriebe (5) vorgesehen ist, das unterhalb der Transportplatte (3) angeordnet ist und jeweils an der in Bewegungsrichtung letzten Transportplatte (3) einer Führungsbahn angreift, daß im Hebelgetriebe (5) ein sich diagonal zum Rechteck erstreckender zweiarmiger Diagonalhebel (24) vorgesehen und um eine mittlere Achse (25) schwenkbar ist, daß im Bereich der Achse ein sich quer zur Hebellänge erstreckender Antriebsarm (28) vorgesehen ist, dessen Ende mit der Kurvenscheibe (4) in Eingriff steht, daß die diagonalen Hebelenden mit am Ende von zwei einander gegenüber befindlichen Führungsbahnen vorgesehen Schiebern (23) in Antriebsverbindung stehen, daß ein einarmiger Hebel (31) mit der Kurvenscheibe (4) in Eingriff steht, dessen Ende mit einem Schieber (22) am Ende einer der beiden anderen Führungsbahnen (14, 15) in Antriebsverbindung steht, daß an seinem Ende eine Übertragungsstange (33) angelenkt ist, deren anderes Ende an einem Hebelarm einer Wippe (34) angelenkt ist, deren anderer Hebelarm mit einem Schieber (22) am Ende der vierten Führungsbahn in Antriebsverbindung steht, und daß am Ende des Antriebsarmes (28) und im mittleren Bereich des einarmigen Hebels (31) je eine Rolle (29 bzw. 32) angebracht sind, die beide mit der selben Führungskontur, insbesondere einer Nut (11) der Kurvenscheibe (4) in Eingriff stehen.

2. Schalttisch nach Anspruch 1, dadurch gekennzeichnet, daß an der Kurvenscheibe (4) ein Nocken (12) zur Betätigung eines Endschalters (13) angebracht ist, der nach je einem Umlauf der Kurvenscheibe einen Antriebsmotor (22) stillsetzt, der durch ein äußeres Signal wieder in Betrieb setzbar ist.

3. Schalttisch nach Anspruch 1, dadurch gekennzeichnet, daß die Transportplatten (3) an ihrer Unterseite mit einer Führungsrolle (20) versehen sind, die in einer Hilfsführungsnut (21) geführt ist.

## Claims

1. Transfer table with several workpiece holders, with a stepping drive for a cyclically rotating, stepwise movement guided by straight guides (14, 15, 17) arranged as a rectangle, into a position defined by stops, in which a machining operation is carried out on the workpiece or the workpiece is deposited or removed, with a housing (1), in which the drive and the stops are located and which comprises the guides (14, 15, 17), the workpiece holders being respectively located on a rectangular conveying plate (3) and the conveying plates (3) are provided with members (16) engaging in the guide paths (15), characterised in that provided as the drive for all the movements is a single rotating cam disc (4) with a lever transmission (5), which is located below the conveying plate (3) and acts respectively on the last conveying plate (3) of a guide path, seen in the direction of movement, that provided in the lever transmission (5) is a two-armed diagonal lever (24) extending diagonally with respect to the rectangle and which is able to pivot about a central pivot (25), that provided in the region of the pivot is a driving arm (28) extending transversely to the length of the lever, the end of which arm is in engagement with the cam disc (4), that the diagonal lever ends are in driving connection with slides (23) provided at the end of two guide paths located opposite each other, that a one-armed lever (31) is in engagement with the cam disc (4), the end of which is in driving connection with a slide (22) at the end of one of the two other guide paths (14, 15), that a transmission rod (33) is pivoted at its end, whereof the other end is pivoted on a lever arm of a rocker (34), whereof the other lever arm is in driving connection with a slide (22) at the end of the fourth guide path, and that located at the end of the driving arm (28) and in the central region of the one-armed lever (31) is a roller (29) respectively (32), which both engage with the same guide contour, in particular of a groove (11) of the cam disc (4).

2. Transfer table according to claim 1, characterised in that provided on the cam disc (4) is a boss (12) for actuating a limit switch (13), which after one revolution of the cam disc stops a drive motor (22), which can be set in operation once more by an external signal.

3. Transfer table according to claim 1, characterised in that on their underside the conveying plates (3) are provided with a guide roller (20), which is guided in an auxiliary guide groove (21).

## Revendications

1. Table de transfert comprenant plusieurs supports de pièce à usiner, un mécanisme d'entraînement pas à pas pour un déplacement, tournant de manière cyclique, progressif et guidé par des guidages (14, 15, 17) rectilignes agencés en quadrilatère, dans une position qui est définie par des butées et dans laquelle un processus de traitement est effectué sur la pièce à usiner ou respectivement la pièce à usiner est placée ou enlevée, un corps (1), dans lequel sont logés le mécanisme d'entraînement et les butées et qui présente les guidages (14, 15, 17), les supports de pièce à usiner étant agencés à chaque fois sur une plaque de transport (3) quadrangulaire, les plaques de transport (3) présentant des éléments (16) qui pénètrent dans les voies de guidage (15), caractérisées en ce que, comme mécanisme d'entraînement pour tous les déplacements, est prévue une seule came (4) rotative avec une transmission à leviers (5) qui est agencée en dessous de la plaque de transport (3) et agit respectivement sur la dernière plaque de transport (3), dans le sens de déplacement, d'une voie de guidage, en ce qu'un levier diagonal à deux bras (24), qui s'étend en diagonale par rapport au quadrilatère, est prévu dans la transmission à leviers (5) et est capable de pivoter autour d'un axe central (25), en ce que, dans la zone de l'axe, est prévu un bras d'entraînement (28) qui s'étend transversalement à la longueur du levier et dont l'extrémité est en prise avec la came (4), en ce que les extrémités du levier diagonal sont reliées, de façon à les entraîner, à des coulisseaux (23) prévus à l'extrémité de deux voies de guidage situées l'une en face de l'autre, en ce qu'un levier à un bras (31) est en prise avec la came (4), son extrémité étant en liaison, de façon à l'entraîner, avec un coulisseau (22) à l'extrémité d'une des deux autres voies de guidage (14, 15), en ce qu'à son extrémité est articulée une barre de transmission (33) dont l'autre extrémité est articulée sur un bras de levier d'une bascule (34), dont l'autre bras de levier est en liaison, de façon à l'entraîner, avec un coulisseau (22) à l'extrémité de la quatrième voie de guidage, et en ce que, à l'extrémité du bras d'entraînement (28) et dans la zone centrale du levier à un bras (31), est chaque fois agencé un galet (29 ou respectivement 32), ces deux galets étant en prise avec le même contour de guidage, en particulier une rainure (11), de la came (4).

2. Table de transfert suivant la revendication 1, caractérisée en ce que, sur la came (4), est agencé, pour l'actionnement d'un commutateur de fin de course (13), un ergot (12) qui arrête, après chaque rotation de la came, un moteur d'entraînement (22) qui peut être remis en service par un signal externe.

3. Table de transfert suivant la revendication 1, caractérisée en ce que les plaques de transport (3) sont pourvues, sur leur face inférieure, d'un galet de guidage (20), qui est guidé dans une rainure de guidage auxiliaire (21).

Fig. 1

Fig. 2

Fig. 3

0 026 285

Fig. 4

Fig. 5